# EUROPÄISCHE PATENTSCHRIFT

(11) **EP 2 726 339 B1**
(45) Veröffentlichungstag und Bekanntmachung des Hinweises auf die Patenterteilung: **12.09.2018**
(21) Anmeldenummer: 12724331.9
(22) Anmeldetag: 29.05.2012
(51) Int. Cl.: B60S 1/38

(54) **WISCHVORRICHTUNG**
WIPING DEVICE
DISPOSITIF D'ESSUYAGE

(30) Priorität: 28.06.2011 DE 102011078198
(43) Veröffentlichungstag der Anmeldung: 07.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/059947
(87) Internationale Veröffentlichungsnummer: WO 2013/000647

(56) Entgegenhaltungen:
- DE-A1- 10 036 115
- DE-A1- 10 043 427
- DE-A1- 19 645 170
- FR-A1- 2 925 001
- FR-A1- 2 925 437

## Beschreibung

### Stand der Technik

Es ist bereits eine Wischvorrichtung, insbesondere eine Kraftfahrzeugscheibenwischvorrichtung, mit einem Halteelement, das zumindest einen Längsführungskanal zur Führung zumindest eines Federelements aufweist, bekannt.

Eine Wischvorrichtung mit den Merkmalen des Oberbegriffs des Anspruchs 1 ist beispielsweise aus der FR 2925001 A1 bekannt.

### Offenbarung der Erfindung

Die Erfindung geht aus von einer Wischvorrichtung, insbesondere von einer Kraftfahrzeugscheibenwischvorrichtung, mit einem Halteelement, das zumindest einen Längsführungskanal zur Führung zumindest eines Federelements aufweist.

Es wird vorgeschlagen, dass das Halteelement zumindest eine Montagecodierung aufweist, die dazu vorgesehen ist, genau eine eindeutige Montageposition mit einem Wischblattadapter festzulegen, wodurch Fehler bei einer Montage der Wischvorrichtung vorteilhaft vermieden werden können. Unter einem "Halteelement" soll dabei in diesem Zusammenhang insbesondere ein Element verstanden werden, das dazu vorgesehen ist, ein Windabweiserelement, ein Federelement und eine Wischleiste formschlüssig zu verbinden. Unter einem "Windabweiserelement" soll in diesem Zusammenhang insbesondere ein Element verstanden werden, das dazu vorgesehen ist, einen auf die Wischvorrichtung wirkenden Fahrtwind abzuweisen und/oder für ein Anpressen einer Wischleiste auf eine Fahrzeugscheibe zu nutzen. Unter einer "Wischleiste" soll in diesem Zusammenhang insbesondere eine Leiste verstanden werden, die dazu vorgesehen ist, eine Fahrzeugscheibe zu wischen. Unter einem "Federelement" soll in diesem Zusammenhang insbesondere ein federelastisches

Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einem "Längsführungskanal" soll in diesem Zusammenhang insbesondere ein Führungskanal verstanden werden, der sich parallel zu einer Längsrichtung des Halteelements erstreckt. Bevorzugt umfasst der Längsführungskanal einen Freiraum sowie zumindest eine den Freiraum begrenzende Kanalwand. Unter einer "Längsrichtung" soll in diesem Zusammenhang insbesondere eine Richtung verstanden werden, die sich im Wesentlichen parallel zu einer Längserstreckung des Halteelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einer "Montagecodierung" soll in diesem Zusammenhang insbesondere eine technische Vorrichtung verstanden werden, die dazu vorgesehen ist, zumindest zwei Bauteile bei einer Montage in genau eine eindeutige Position zu führen, wobei ein ungewolltes, falsches Montieren der Bauteile vermieden werden kann. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter "vorgesehen" soll insbesondere speziell ausgelegt und/oder ausgestattet verstanden werden. Nach der Erfindung wird vorgeschlagen, dass das Halteelement zumindest zwei Befestigungsausformungen umfasst, die Konturen aufweisen, die voneinander unterschiedlich ausgebildet und dazu vorgesehen sind, genau eine eindeutige Montageposition mit einem Wischblattadapter festzulegen, wodurch Montagefehler vorteilhaft besonders einfach vermieden werden können. Unter einer "Befestigungsausformung" soll in diesem Zusammenhang insbesondere eine Ausformung verstanden werden, die dazu vorgesehen ist, bei einer Montage einen Formschluss mit einem weiteren Bauteil zu bilden. Bevorzugt ist die Befestigungsausformung von einer Ausnehmung gebildet. Nach der Erfindung wird vorgeschlagen, dass das Halteelement asymmetrisch zu einer sich senkrecht zu einer Längsrichtung des Halteelements erstreckenden Mittelebene ausgebildet ist, wodurch eine fehlerfreie Montage weiter vereinfacht werden kann. Unter einer "Mittelebene" soll in diesem Zusammenhang insbesondere eine Ebene verstanden werden, die durch einen Mittelpunkt einer Längserstreckung eines Bauteils verläuft.

Sind die Befestigungsausformungen zumindest teilweise in zumindest einer Seitenwandung, die den Längsführungskanal seitlich begrenzt, angeordnet, kann eine besonders kompakte Bauform der Wischvorrichtung erreicht werden. Unter "seitlich" soll in diesem Zusammenhang insbesondere in einer Wischrichtung betrachtet verstanden werden. Unter einer "Wischrichtung" soll in diesem Zusammenhang insbesondere eine Richtung verstanden werden, in welche sich die Wischvorrichtung in einem Betriebszustand relativ zu einer zu wischenden Oberfläche bewegt. Bevorzugt erstreckt sich die Wischrichtung parallel zu einer zu wischenden Oberfläche und/oder senkrecht zu einer Hauptausrichtung der Wischleiste.

Des Weiteren wird vorgeschlagen, dass die Befestigungsausformungen unterschiedliche Längserstreckungen aufweisen, wodurch die Konturen besonders einfach ausgestaltet werden können. Unter einer "Längserstreckung" soll in diesem Zusammenhang insbesondere die größte Erstreckung verstanden werden, die parallel zur Längsrichtung verläuft.

Sind die Befestigungsausformungen, in Längsrichtung betrachtet, versetzt zueinander angeordnet, kann das Halteelement besonders stabil ausgebildet werden. Unter "versetzt" soll in diesem Zusammenhang insbesondere verstanden werden, dass zumindest eine Ebene existiert, die sich senkrecht zur Längsrichtung erstreckt und genau eine der Befestigungsausformungen schneidet. Bevorzugt sind die Befestigungsausformungen, in Längsrichtung betrachtet, voneinander beabstandet. Zwischen den Befestigungsausformungen ist jeweils ein befestigungsausnehmungsfreier Bereich angeordnet, in welchem eine Ebene, die sich senkrecht zur Längsrichtung erstreckt, keine Befestigungsausformung schneidet.

Eine besonders sichere Montage der Wischvorrichtung mit einem Wischarmadapter kann erreicht werden, wenn die Wischvorrichtung einen Wischblattadapter aufweist, der dazu vorgesehen ist, mit dem Halteelement gekoppelt zu werden.

Weist der Wischblattadapter zumindest ein Rastelement auf, welches am Halteelement in einem montierten Zustand seitlich anliegt und dazu vorgesehen ist, eine Bewegung des Wischblattadapters relativ zum Halteelement in eine Längsrichtung zu vermeiden, kann eine Montage der Wischvorrichtung besonders schnell erfolgen. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden.

Eine besonders hohe Betriebssicherheit kann erreicht werden, wenn die Wischvorrichtung zumindest ein Sicherungsmittel aufweist, das dazu vorgesehen ist, das zumindest eine Rastelement in einem Betriebszustand zu sichern.

### Zeichnungen

Weitere Vorteile ergeben sich aus der folgenden Zeichnungsbeschreibung. In der Zeichnung sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischvorrichtung mit einem Halteelement,
- Fig. 2: eine Schnittdarstellung des Halteelements nach Figur 1,
- Fig. 3: eine Draufsicht des Halteelements nach Figur 1,
- Fig. 4: eine Draufsicht des Halteelements nach Figur 1 mit einem Wischblattadapter,
- Fig. 5: eine perspektivische Detailansicht des Wischblattadapters und des Halteelements nach Figur 4,
- Fig. 6: eine Draufsicht eines weiteren Ausführungsbeispiels einer erfindungsgemäßen Wischvorrichtung mit einem Halteelement,
- Fig. 7: eine Draufsicht auf das Halteelement nach Figur 6 mit einem Wischblattadapter,
- Fig. 8: eine Draufsicht eines weiteren Ausführungsbeispiels einer erfindungsgemäßen Wischvorrichtung mit einem Halteelement,
- Fig. 9: eine Schnittdarstellung durch einen Wischblattadapter und ein Federelement einer Wischvorrichtung nach Figur 8,
- Fig. 10: eine Schnittdarstellung durch den Wischblattadapter und ein Federelement einer Wischvorrichtung nach Figur 9 und
- Fig. 11: eine Schnittdarstellung durch den Wischblattadapter, ein Halteelement und ein Federelement einer Wischvorrichtung nach Figur 10.

### Beschreibung der Ausführungsbeispiele

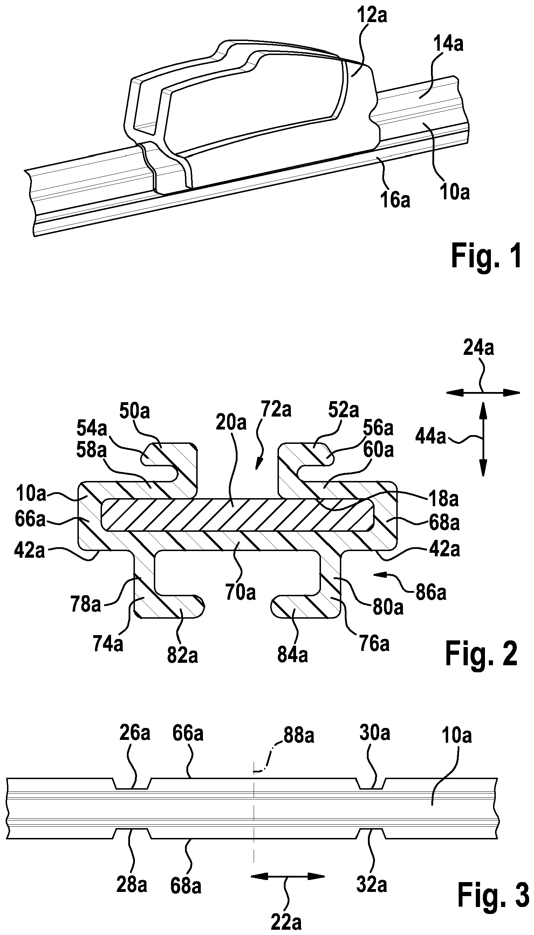

Figur 1 zeigt eine perspektivische Ansicht einer erfindungsgemäßen Wischvorrichtung mit einem Halteelement 10a, einem Wischblattadapter 12a, einem Windabweiserelement 14a und einer Wischleiste 16a in einem montierten Zustand. Der Wischblattadapter 12a, das Windabweiserelement 14a und die Wischleiste 16a sind am Halteelement 10a befestigt. Der Wischblattadapter 12a ist dazu vorgesehen, mit einem Wischerarm (nicht dargestellt) gekoppelt zu werden. Über das Halteelement 10a wird die Wischleiste 16a in einem Betriebszustand, d.h. wenn der Wischerarm eine Wischbewegung ausführt, über eine zu wischende Oberfläche (nicht dargestellt) bewegt. Bei einem Auftreffen von Fahrtwind weist das Windabweiserelement 14a diesen ab und presst die Wischleiste 16a auf die zu wischende Oberfläche.

Figur 2 zeigt das Halteelement 10a, das einen Längsführungskanal 18a zur Führung eines Federelements 20a aufweist, in einer Schnittdarstellung. Die Schnittebene verläuft senkrecht zu einer Längsrichtung 22a des Halteelements 10a. Das Halteelement 10a weist zwei Windabweiserbefestigungselemente 50a, 52a auf. Die Windabweiserbefestigungselemente 50a, 52a sind einstückig mit dem Halteelement 10a ausgebildet. Die Windabweiserbefestigungselemente 50a, 52a weisen an ihren freien Enden 54a, 56a in voneinander abgewandte Richtungen. Ferner bilden die Windabweiserbefestigungselemente 50a, 52a zwei Kanalwandungen 58a, 60a, die an den Längsführungskanal 18a an einer wischleistenabgewandten Seite angrenzen. Die Windabweiserbefestigungselemente 50a, 52a sind im Bereich ihrer freien Enden 54a, 56a widerhakenförmig ausgebildet. Die Enden 54a, 56a sind in einem montierten Zustand von einem Windabweiserelement 14a umschlossen.

Zur Führung des Federelements 20a grenzen Seitenwandungen 66a, 68a des Längsführungskanals 18c an die Kanalwandungen 58a, 60a. Die Kanalwandungen 58a, 60a schließen dabei einen rechten Winkel mit den Seitenwandungen 66a, 68a ein. An den Seitenwandungen 66a, 68a ist ferner eine Zwischenwandung 70a angeordnet, die den Längsführungskanal 18a in Richtung der Wischleiste 16a abschließt. Die Seitenwandungen 66a, 68a erstrecken sich von der Zwischenwandung 70a aus in eine von der Wischleiste 16a abgewandte Richtung. Das Halteelement 10a weist eine Längsöffnung 72a auf, die den Längsführungskanal 18a zum Windabweiserelement 14a hin öffnet.

An der Zwischenwandung 70a sind zwei L-förmige Führungsprofile 74a, 76a des Halteelements 10a angeordnet. Die Führungsprofile 74a, 76a sind einstückig mit dem Halteelement 10a ausgebildet. Die Führungsprofile 74a, 76a weisen jeweils eine Seitenführung 78a, 80a und jeweils eine Vertikalführung 82a, 84a auf. Die Vertikalführungen 82a, 84a schließen mit den Seitenführungen 78a, 80a jeweils einen Winkel von 90° ein. Die Seitenführungen 78a, 80a schließen jeweils einen Winkel von 90° zur Zwischenwandung 70a ein. Die Führungsprofile 74a, 76a weisen an ihren freien Enden der Vertikalführungen 82a, 84a in einander zugewandte Richtungen. Die Führungsprofile 74a, 76a und die Zwischenwandung 70a bilden eine Kederschiene 86a, in welche die Wischleiste 16a in einem montierten Zustand eingeführt ist.

Das Halteelement 10a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid, Polycarbonat und/oder Polystyrol.

Figur 3 zeigt eine Draufsicht auf das Halteelement 10a. Das Halteelement 10a weist eine Montagecodierung 34a auf, die genau eine eindeutige Montageposition mit dem Wischblattadapter 12a festlegt. Das Halteelement 10a weist dazu vier Befestigungsausformungen 26a, 28a, 30a, 32a auf, die als Befestigungsausnehmungen ausgebildet sind. Die Befestigungsausformungen 26a, 28a, 30a, 32a bilden im montierten Zustand einen Formschluss mit einem Wischblattadapter 12a. Die Befestigungsausformungen 26a, 28a, 30a, 32a sind in den Seitenwandungen 66a, 68a, die den Längsführungskanal 18a seitlich begrenzen, angeordnet. Auf jeder in eine Wischrichtung weisenden Seite des Halteelements 10a weisen zwei Befestigungsausformungen 26a, 28a bzw. 30a, 32a trapezförmige Konturen auf, die voneinander unterschiedlich ausgebildet sind, wodurch genau eine eindeutige Montageposition mit einem Wischblattadapter 12a festgelegt ist. Durch die unterschiedlichen Konturen ist das Halteelement 10a asymmetrisch zu einer sich senkrecht zur Längsrichtung 22a des Halteelements 10a erstreckenden Mittelebene 88a ausgebildet. Die Befestigungsausformungen 26a, 28a, 30a, 32a sind teilweise in der Seitenwandung 66a, 68a, die den Längsführungskanal 18a seitlich begrenzt, angeordnet. Die Befestigungsausformungen 26a, 28a weisen unterschiedliche Längserstreckungen auf. Dabei ist die maximale Längserstreckung der Befestigungsausformungen 30a, 32a um 50 % größer als die maximale Längserstreckung der Befestigungsausformungen 26a, 28a. Die Befestigungsausformungen 26a bzw. 28a sind zu den Befestigungsausformungen 30a bzw. 32a, in Längsrichtung 22a betrachtet, versetzt angeordnet.

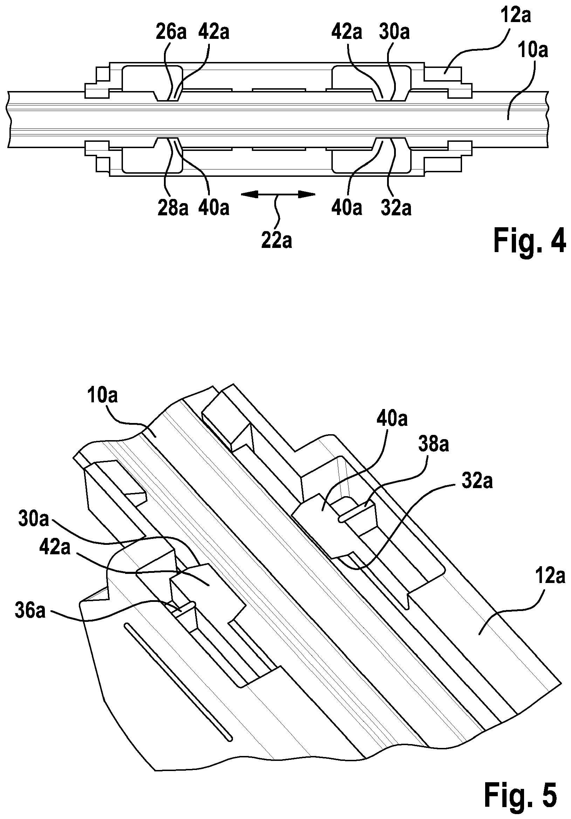

Zu einer Montage wird der Wischblattadapter 12a in Längsrichtung 22a auf das Halteelement 10a aufgeschoben. Der Wischblattadapter 12a weist vier Rastelemente 40a, 42a auf, welche in einem montierten Zustand seitlich am Halteelement 10a anliegen und eine Bewegung des Wischblattadapters 12a relativ zum Halteelement 10a in Längsrichtung 22a vermeiden (Figur 4). Die Rastelemente 40a, 42a greifen dabei in die Befestigungsausformungen 26a, 28a, 30a, 32a und vermeiden somit auch eine Bewegung des Wischblattadapters 12a relativ zum Halteelement 10a in die Längsrichtung 22a.

Die Rastelemente 40a, 42a werden bei der Montage zunächst aus einer Ausgangsposition heraus in eine Wischrichtung 24a federelastisch ausgelenkt und bewegen sich anschließend selbstständig in die Ausgangsposition zurück. Dabei greifen zwei Sicherungsmittel 36a, 38a des Wischblattadapters 12a seitlich jeweils an eines der Rastelemente 40a, 42a und vermeiden ein erneutes Auslenken der Rastelemente 40a, 42a (Figur 5). Die Sicherungsmittel 36a, 38a lassen sich dabei jeweils um eine Schwenkachse, die parallel zu einer Vertikalrichtung 44a verläuft, auslenken. Sollen die Rastelemente 40a, 42a aus dem montierten Zustand ausgelenkt werden, müssen zunächst die Sicherungsmittel 36a, 38a ausgelenkt werden.

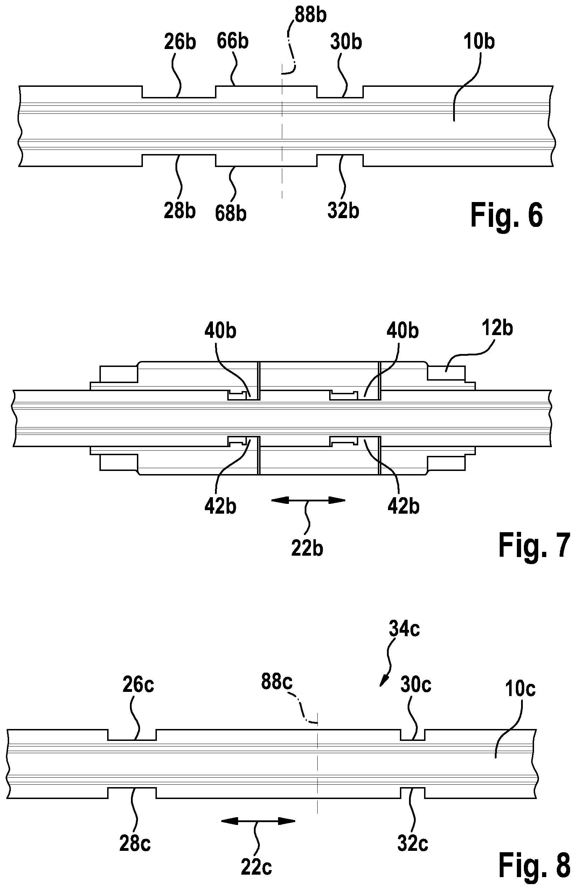

In den Figuren 6 bis 11 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 5 durch die Buchstaben b und c in den Bezugszeichen der Ausführungsbeispiele der Figuren 6 bis 11 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 6 zeigt eine Draufsicht auf ein Halteelement 10b eines weiteren Ausführungsbeispiels einer Wischvorrichtung. Das Halteelement 10b entspricht im Querschnitt dem in Figur 2 gezeigten Halteelement 10a. Das Halteelement 10b weist eine Montagecodierung 34b auf, die genau eine eindeutige Montageposition mit einem Wischblattadapter 12b festlegt. Das Halteelement 10b weist dazu vier Befestigungsausformungen 26b, 28b, 30b, 32b auf, die als Befestigungsausnehmungen ausgebildet sind. Die Befestigungsausformungen 26b, 28b, 30b, 32b bilden im montierten Zustand einen Formschluss mit einem Wischblattadapter 12b. Die Befestigungsausformungen 26b, 28b, 30b, 32b sind in Seitenwandungen 66b, 68b, die einen Längsführungskanal 18b seitlich begrenzen, angeordnet. Auf jeder in eine Wischrichtung weisenden Seite des Halteelements 10b weisen zwei Befestigungsausformungen 26b, 28b bzw. 30b, 32b rechteckige Konturen auf, die voneinander unterschiedlich ausgebildet sind, wodurch genau eine eindeutige Montageposition mit einem Wischblattadapter 12b festgelegt ist. Durch die unterschiedlichen Konturen ist das Halteelement 10b asymmetrisch zu einer sich senkrecht zur Längsrichtung 22b des Halteelements 10b erstreckenden Mittelebene 88b ausgebildet. Die Befestigungsausformungen 26b, 28b, 30b, 32b sind teilweise in der Seitenwandung 66b, 68b, die den Längsführungskanal 18b seitlich begrenzt, angeordnet. Die Befestigungsausformungen 26b, 28b weisen unterschiedliche Längserstreckungen auf. Dabei ist die maximale Längserstreckung der Befestigungsausformungen 26b, 28b um 62 % größer als die maximale Längserstreckung der Befestigungsausformungen 30b, 32b. Die Befestigungsausformungen 26b bzw. 28b sind zu den Befestigungsausformungen 30b bzw. 32b, in Längsrichtung 22b betrachtet, versetzt angeordnet.

Bei einer Montage wird der Wischblattadapter 12b in Längsrichtung 22b auf das Halteelement 10b aufgeschoben. Der Wischblattadapter 12b weist vier Rastelemente 40b, 42b auf, welche in einem montierten Zustand seitlich am Federelement 20b anliegen und eine Bewegung des Wischblattadapters 12b relativ zum Federelement 20b in Längsrichtung 22b vermeiden.

Die Rastelemente 40b, 42b liegen in einem montierten Zustand seitlich am Halteelement 10b an (Figur 7). Die Rastelemente 40b, 42b greifen dabei in die Befestigungsausformungen 26b, 28b und vermeiden somit auch eine Bewegung des Wischblattadapters 12b relativ zum Halteelement 10b in die Längsrichtung 22b. Ferner greift der Wischblattadapter 12b in die Befestigungsausformungen 26b, 30b ein und bildet so einen weiteren, in Längsrichtung 22b wirkenden Formschluss. Die Rastelemente 40b, 42b werden bei der Montage zunächst aus einer Ausgangsposition heraus in Wischrichtung 24b federelastisch ausgelenkt und bewegen sich anschließend selbstständig in die Ausgangsposition zurück.

Figur 8 zeigt eine Draufsicht auf ein Halteelement 10c eines weiteren Ausführungsbeispiels einer Wischvorrichtung. Das Halteelement 10c entspricht im Querschnitt dem in Figur 2 gezeigten Halteelement 10a. Das Halteelement 10c weist eine Montagecodierung 34c auf, die genau eine eindeutige Montageposition mit einem Wischblattadapter 12c festlegt. Das Halteelement 10c weist dazu vier Befestigungsausformungen 26c, 28c, 30c, 32c auf, die als Befestigungsausnehmungen ausgebildet sind. Die Befestigungsausformungen 26c, 28c, 30c, 32c bilden im montierten Zustand einen Formschluss mit dem Wischblattadapter 12c. Die Befestigungsausformungen 26c, 28c, 30c, 32c sind in Seitenwandungen 66c, 68c, die einen Längsführungskanal 18c seitlich begrenzen, angeordnet. Auf jeder in eine Wischrichtung weisenden Seite des Halteelements 10c weisen zwei Befestigungsausformungen 26c, 28c bzw. 30c, 32c rechteckige Konturen auf, die voneinander unterschiedlich ausgebildet sind, wodurch genau eine eindeutige Montageposition mit dem Wischblattadapter 12c festgelegt ist. Durch die unterschiedlichen Konturen ist das Halteelement 10c asymmetrisch zu einer sich senkrecht zu einer Längsrichtung 22c des Halteelements 10c erstreckenden Mittelebene 88c ausgebildet. Die Befestigungsausformungen 26c, 28c, 30c, 32c sind teilweise in der Seitenwandung 66c, 68c, die den Längsführungskanal 18c seitlich begrenzt, angeordnet. Die Befestigungsausformungen 26c, 28c weisen unterschiedliche Längserstreckungen auf. Dabei ist die maximale Längserstreckung der Befestigungsausformungen 26c, 28c jeweils doppelt so groß wie die maximale Längserstreckung der Befestigungsausformungen 30c, 32c. Die Befestigungsausformungen 26c bzw. 28c sind zu den Befestigungsausformungen 30c bzw. 32c, in Längsrichtung 22c betrachtet, versetzt angeordnet.

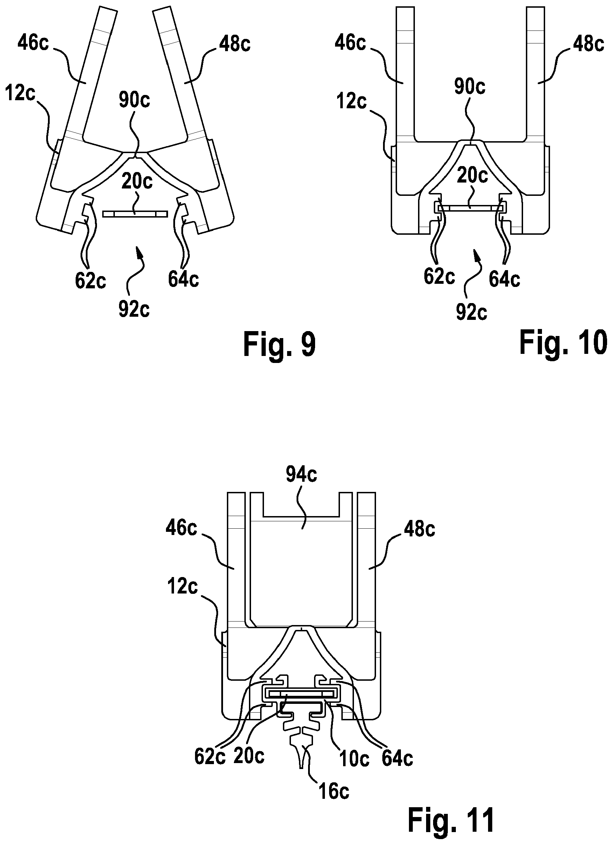

Figur 9 zeigt einen Schnitt durch den Wischblattadapter 12c, wobei sich die Schnittebene senkrecht zur Längsrichtung 22c erstreckt. Der Wischblattadapter 12c ist von zwei Seitenteilen 46, 48 gebildet, die über ein Drehgelenk 90c schwenkbar miteinander verbunden sind. Bei einer Montage werden die Seitenteile 46c, 48c um eine Schwenkachse ausgelenkt, wobei sich zwei Vertikalhaltemittel 62c, 64c der Seitenteile 46c, 48c voneinander entfernen und einen Aufnahmebereich 92c zur Aufnahme eines Federelements 20c und des Halteelements 10c öffnen. Die Schwenkachse erstreckt sich dabei parallel zur Längsrichtung 22c. Das Halteelement 10c ist aus Gründen der Übersichtlichkeit in den Figuren 9 und 10 nicht dargestellt.

In einem weiteren Montageschritt werden die Seitenteile 46c, 48c um die Schwenkachse zurückgeschwenkt, wobei die zwei Vertikalhaltemittel 62c, 64c an dem Federelement 20c und am Halteelement 10c zur Anlage kommen (Figur 10, Figur 11). Vier Befestigungsmittel des Wischblattadapters 12c greifen dabei in die Befestigungsausformungen 26c, 28c, 30c, 32c ein. Ein Sicherungskörper 94c wird nun auf einer wischleistenabgewandten Seite des Drehgelenks 90c zwischen die Seitenteile 46c, 48c eingebracht und liegt an den Seitenteilen 46c, 48c an. Ein Zurückschwenken der Seitenteile 46c, 48c ist dadurch vermieden. Das Federelement 20c und das Halteelement 10c sind in Vertikalrichtung 44c, in Wischrichtung 24c und in Längsrichtung 22c gesichert.

## Patentansprüche

1. Wischvorrichtung, insbesondere Kraftfahrzeugscheibenwischvorrichtung, mit einem Halteelement (10a - 10c), das zumindest einen Längsführungskanal (18a - 18c) zur Führung zumindest eines Federelements (20a - 20c) aufweist, wobei das Halteelement (10a - 10c) zumindest eine Montagecodierung (34a - 34c) aufweist, die dazu vorgesehen ist, genau eine eindeutige Montageposition mit einem Wischblattadapter (12a - 12c) festzulegen, wobei das Halteelement (10a-10c) zumindest zwei Befestigungsausformungen (26a - 26c, 28a - 28c, 30a - 30c, 32a - 32c) umfasst, die Konturen aufweisen, die voneinander unterschiedlich ausgebildet und dazu vorgesehen sind, genau eine eindeutige Montageposition mit einem Wischblattadapter (12a - 12c) festzulegen, **dadurch gekennzeichnet, dass** das Halteelement (10a - 10c) asymmetrisch zu einer sich senkrecht zu einer Längsrichtung (22a - 22c) des Halteelements (10a - 10c) erstreckenden Mittelebene (88a - 88c) ausgebildet ist.

2. Wischvorrichtung nach Anspruch 1, **dadurch gekennzeichnet, dass** die Befestigungsausformungen (26a - 26c, 28a - 28c, 30a - 30c, 32a - 32c) zumindest teilweise in zumindest einer Seitenwandung (66a - 66c, 68a - 68c), die den Längsführungskanal (18a - 18c) seitlich begrenzt, angeordnet sind.

3. Wischvorrichtung nach einem der vorhergehenden Ansprüche, **dadurch gekennzeichnet, dass** die Befestigungsausformungen (26a - 26c, 28a - 28c, 30a - 30c, 32a - 32c) unterschiedliche Längserstreckungen aufweisen.

4. Wischvorrichtung nach einem der vorhergehenden Ansprüche, **dadurch gekennzeichnet, dass** die Befestigungsausformungen (26a - 26c, 28a - 28c, 30a - 30c, 32a - 32c), in Längsrichtung (22a -22c) betrachtet, versetzt zueinander angeordnet sind.

5. Wischvorrichtung nach einem der vorhergehenden Ansprüche, **gekennzeichnet durch** einen Wischblattadapter (12a - 12c), der dazu vorgesehen ist, mit dem Halteelement (10a - 10c) gekoppelt zu werden.

6. Wischvorrichtung nach Anspruch 5, **dadurch gekennzeichnet, dass** der Wischblattadapter (12a; 12b) zumindest ein Rastelement (40a; 40b, 42a; 42b) aufweist, welches am Halteelement (10a; 10b) in einem montierten Zustand seitlich anliegt und dazu vorgesehen ist, eine Bewegung des Wischblattadapters (12a; 12b) relativ zum Halteelement (10a; 10b) in eine Längsrichtung (22a; 22b) zu vermeiden.

7. Wischvorrichtung zumindest nach Anspruch 6, **gekennzeichnet durch** zumindest ein Sicherungsmittel (36a, 38a), das dazu vorgesehen ist, das zumindest eine Rastelement (40a, 42a) in einem Betriebszustand zu sichern.

8. Wischvorrichtung nach einem der vorhergehenden Ansprüche sowie mit einem Federelement (20a - 20c), einem Windabweiserelement (14a - 14c), einem Wischblattadapter (12a - 12c) und einer Wischleiste (16a - 16c).

## Claims

1. Wiping device, in particular a wiping device for a motor vehicle pane, comprising a retaining element (10a - 10c) which has at least one longitudinal guide channel (18a - 18c) for guiding at least one spring element (20a - 20c), wherein the retaining element (10a -10c) has at least one mounting code (34a - 34c) which is provided to define exactly one explicit mounting position with a wiper blade adapter (12a - 12c), wherein the retaining element (10a - 10c) comprises at least two fastening shapes (26a - 26c, 28a - 28c, 30a - 30c, 32a - 32c) which have contours which are configured differently from one another and are provided to define exactly one explicit mounting position with a wiper blade adapter (12a - 12c), **characterized in that**
the retaining element (10a - 10c) is configured asymmetrically to a central plane (88a - 88c) extending perpendicular to a longitudinal direction (22a - 22c) of the retaining element (10a - 10c).

2. Wiping device according to Claim 1, **characterized in that** the fastening shapes (26a - 26c, 28a - 28c, 30a - 30c, 32a - 32c) are arranged at least partially in at least one lateral wall (66a - 66c, 68a - 68c) which laterally defines the longitudinal guide channel (18a - 18c).

3. Wiping device according to either of the preceding claims, **characterized in that** the fastening shapes (26a - 26c, 28a - 28c, 30a - 30c, 32a - 32c) have different longitudinal dimensions.

4. Wiping device according to one of the preceding claims, **characterized in that** the fastening shapes (26a - 26c, 28a - 28c, 30a - 30c, 32a - 32c) are arranged offset to one another, viewed in the longitudinal direction (22a - 22c).

5. Wiping device according to one of the preceding claims, **characterized by** a wiper blade adapter (12a - 12c) which is provided to be coupled to the retaining element (10a - 10c).

6. Wiping device according to Claim 5, **characterized in that** the wiper blade adapter (12a; 12b) has at least one latching element (40a; 40b, 42a; 42b) which bears laterally against the retaining element (10a; 10b) in a mounted state and is provided to prevent a movement of the wiper blade adapter (12a; 12b) relative to the retaining element (10a; 10b) in a longitudinal direction (22a; 22b).

7. Wiping device according to at least Claim 6, **characterized by** at least one securing means (36a, 38a) which is provided to secure the at least one latching element (40a, 42a) in an operating state.

8. Wiping device according to one of the preceding claims and comprising a spring element (20a - 20c), a wind spoiler element (14a - 14c), a wiper blade adapter (12a - 12c) and a wiper strip (16a - 16c).

## Revendications

1. Dispositif d'essuyage, en particulier dispositif d'essuie-glace de véhicule automobile, avec un élément de maintien (10a - 10c), qui présente au moins un canal de guidage longitudinal (18a - 18c) pour le guidage d'au moins un élément de ressort (20a - 20c), dans lequel l'élément de maintien (10a - 10c) présente au moins un codage de montage (34a - 34c), qui est prévu pour fixer exactement une position de montage claire avec un adaptateur de balai d'essuie-glace (12a - 12c), dans lequel l'élément de maintien (10a - 10c) comprend au moins deux formes de fixation (26a - 26c, 28a - 28c, 30a - 30c, 32a - 32c), qui présentent des contours qui sont de forme différente l'un de l'autre et qui sont prévus pour fixer exactement une position de montage claire avec un adaptateur de balai d'essuie-glace (12a - 12c), **caractérisé en ce que** l'élément de maintien (10a - 10c) est de forme asymétrique par rapport à un plan central (88a - 88c) s'étendant perpendiculairement à une direction longitudinale (22a - 22c) de l'élément de maintien (10a - 10c).

2. Dispositif d'essuyage selon la revendication 1, **caractérisé en ce que** les formes de fixation (26a - 26c, 28a - 28c, 30a - 30c, 32a - 32c) sont disposées au moins en partie dans au moins une paroi latérale (66a - 66c, 68a - 68c), qui limite le canal de guidage longitudinal (18a - 18c).

3. Dispositif d'essuyage selon l'une quelconque des revendications précédentes, **caractérisé en ce que** les formes de fixation (26a - 26c, 28a - 28c, 30a - 30c, 32a - 32c) présentent des extensions longitudinales différentes.

4. Dispositif d'essuyage selon l'une quelconque des revendications précédentes, **caractérisé en ce que** les formes de fixation (26a - 26c, 28a - 28c, 30a - 30c, 32a - 32c) vues en direction longitudinale sont disposées en décalage l'une par rapport à l'autre.

5. Dispositif d'essuyage selon l'une quelconque des revendications précédentes, **caractérisé par** un adaptateur de balai d'essuie-glace (12a - 12c), qui est prévu pour être couplé avec l'élément de maintien (10a - 10c).

6. Dispositif d'essuyage selon la revendication 5, **caractérisé en ce que** l'adaptateur de balai d'essuie-glace (12a; 12b) présente au moins un élément d'encliquetage (40a; 40b, 42a; 42b), qui dans un état monté s'applique latéralement sur l'élément de maintien (10a; 10b) et est prévu pour éviter un mouvement de l'adaptateur de balai d'essuie-glace (12a; 12b) dans une direction longitudinale (22a; 22b) par rapport à l'élément de maintien (10a; 10b).

7. Dispositif d'essuyage selon la revendication 6, **caractérisé par** au moins un moyen de blocage (36a, 38a), qui est prévu pour bloquer au moins un élément d'encliquetage (40a, 42a) dans un état de fonctionnement.

8. Dispositif d'essuyage selon l'une quelconque des revendications précédentes ainsi qu'avec un élément de ressort (20a - 20c), un élément déflecteur de vent (14a - 14c), un adaptateur de balai d'essuie-glace (12a - 12c) et un bras d'essuie-glace (16a - 16c).
